# EUROPÄISCHE PATENTANMELDUNG

(11) **EP 1 621 382 A1**
(43) Veröffentlichungstag der Anmeldung: **01.02.2006**
(21) Anmeldenummer: 05015174.5
(22) Anmeldetag: 13.07.2005
(51) Int. Cl.: B60J 1/20, E06B 9/24, D03D 15/00

(54) **Fensterrollo mit unterschiedlicher Lichtdurchlässigkeit**

(30) Priorität: 28.07.2004 DE 102004036649
(71) Anmelder: BOS GmbH & Co. KG, 73760 Ostfildern (DE); rökona Textilwerk GmbH Wirkereiausrüstung, 72072 Tübingen (DE)
(72) Erfinder: Schneider, Roland, 89075 Ulm (DE); Heebaart, Joachim, 72070 Tübingen Hagelloch (DE); Heiner, Uwe-Gert, 72070 Tübingen (DE); Kohn, Hans, 72764 Reutlingen (DE)
(74) Vertreter: Rüger, Barthelt & Abel Patentanwälte

(57) **Zusammenfassung**

Bei einem Fensterrollo für Kraftfahrzeuge ist die Lichtdurchlässigkeit der Rollobahn, über die Fläche gesehen, anisotrop. Entsprechend der jeweils gewünschten und erforderlichen Durchlässigkeit ändert sich die Lichtdurchlässigkeit von der Fensteroberkante zur Fensterunterkante in dem Sinne, dass im Bereich der Fensterunterkante eine bessere Lichtdurchlässigkeit vorhanden ist. Bei einer anderen Ausführungsform ändert sich die Lichtdurchlässigkeit von der Fensterhinterkante zur Fenstervorderkante. Die beste Durchsichtigkeit ist neben der Fenstervorderkante vorhanden.

## Beschreibung

In Kraftfahrzeugen werden Fensterrollos verwendet, um eine übermäßige Sonneneinstrahlung abzuschirmen. Dadurch soll eine Blendwirkung vermieden werden und auch ein übermäßiges Aufheizen des Innenraums. Letzteres ist auch bei Fahrzeugen mit Klimaanlagen von Bedeutung, weil durch die Verwendung von Sonnenrollos die von der Klimaanlage aufzubringende Kühlleisten reduziert werden kann.

In der Regel sind bei den Fensterrollos die Wickelwellen aus Platzgründen unterhalb des Fensters in der Karosserie oder in der Tür untergebracht. Die Sonne steht hingegen mehr oder weniger steil, wenn ihre Einstrahlung durch ein Fensterrollo abgemindert werden soll. Es ist deswegen regelmäßig erforderlich, das Rollo vollständig auszufahren, damit die gewünschte Abschattungswirkung zustande kommt. Es würde keinen Sinn machen, ein von unten kommendes Rollo, beispielsweise an der Heckscheibe, lediglich zu zweidritteln auszufahren, weil durch den verbleibenden Spalt von einem Drittel Fensterfläche an der Oberkante des Fensters noch übermäßig viel störendes Sonnenlicht einfällt.

Die Durchlässigkeit der Rollobahn des Fensterrollos richtet sich nach der gewünschten Abschattungswirkung. In der Summe führt dies dazu, dass zum Beispiel beim Heckscheibenrollos, die Durchsicht durch die Heckscheibe erheblich beeinträchtigt ist, wenn das Fensterrollo ausgefahren ist.

Ein weiterer Grund für die Verwendung von Fensterrollos besteht darin, das Einsehen in den Innenraum zu minimieren. Auch hier muss das Fensterrollo vollständig ausgefahren werden, obwohl eigentlich lediglich ein Teil ausreichen würde.

Ausgehend hiervon ist es Aufgabe der Erfindung ein Rollo für Kraftfahrzeugfenster zu schaffen, das besser an die fahrzeugtechnischen und fahrtechnischen Anforderungen angepasst ist.

Diese Aufgabe wird erfindungsgemäß mit einem Fensterrollo mit den Merkmalen des Anspruches 1, des Anspruches 2 oder des Anspruches 3 gelöst.

Bei dem neuen Fensterrollo wird jeweils eine Wickelwelle verwendet, die neben dem Fenster drehbar gelagert ist. An der Wickelwelle ist mit einer Kante eine Rollobahn befestigt, die in bekannter Weise manuell oder durch einen elektrischen Antrieb von der Wickelwelle abgezogen werden kann. Die Wickelwelle selbst ist mit einem Antrieb versehen, durch den die Wickelwelle im Sinne eines Aufwickelns der Rollobahn auf die Wickelwelle aufgewickelt werden kann.

Die Rollobahn ist bei den neuen Arten von Fensterrollos, hinsichtlich der Lichtdurchlässigkeit, über die Fläche gesehen, nicht homogen. Vielmehr ändert sich die Lichtdurchlässigkeit von einer Kante zur anderen. Beispielsweise ist im Falle eines Heckscheibenrollos die Lichtdurchlässigkeit im Bereich der Oberkante des Fensters geringer, als in der Nähe der Unterkante. Dadurch wird einerseits die gewünschte Abschattungswirkung gegen Sonnenlicht erzielt, andererseits die Sicht nach hinten minimal beeinträchtigt. Insbesondere besteht die Möglichkeit, in jenem Bereich der für die Abschattung zuständig ist, eine noch stärkere Lichtdämpfung zu ermöglichen, als dies bei Fahrzeugrollos möglich ist, die eine homogene Lichtabschwächung zeigen.

Die gleichen Verhältnisse liegen auch bei Seitenfensterrollos vor, bei denen eine stärkere Lichtabschwächung im oberen Bereich gewünscht wird, verglichen mit dem unteren Bereich. Hier ist ein besserer Blick nach draußen möglich, während andererseits die Sonneneinstrahlung deutlich minimiert ist. Je nach Sonnenstand fällt durch den stark lichtdurchlässigen Bereich zur Folge der Aberration nur noch verhältnismäßig wenig Sonnenlicht unmittelbar in das Fahrzeuginnere.

Wenn die Rollobahn eine unterschiedliche Lichtdurchlässigkeit in Richtung parallel zur Längsachse des Fahrzeugs aufweist, also von der Vorder- zur Hinterkante des Fensters, besteht die Möglichkeit, dass Personen, die sich im Fond des Fahrzeugs befinden einen guten Ausblick nach draußen haben, während sie andererseits von außerhalb des Fahrzeugs kaum zu sehen sind, weil sie sich hinter dem dunkleren Bereich der Rollobahn befinden.

Die unterschiedliche Lichtdurchlässigkeit kann, je nach Ausführung des Rollos, sich von der freien Rollokante in Richtung auf die Wickelwelle verändern, oder von einer Längskante der Rollobahn in Richtung auf die andere Längskante. Welche Ausführungsform jeweils gewählt wird, hängt von der gewünschten Richtung des Gradienten der Lichtdurchlässigkeit ab und der Lage der Wickelwelle, bezogen auf die Richtung des besagten Gradienten.

Die unterschiedliche Lichtdurchlässigkeit der Rollobahn kann erreicht werden, indem die Faden-/Faserdichte bei aus Faser-/Fadenmaterial bestehender Rollobahn entsprechend der Lichtdurchlässigkeit variiert wird. Eine unterschiedliche Faser-Fadendichte ist möglich, indem bei Verwendung eines Gewebes die Kett- und Schußfadendichte in gewünschter Weise variiert, oder indem bei Verwendung von Maschenware, beispielsweise Gewirken, die Feinheit der Maschen geändert wird oder auch die Fadendicke. Bei Rollobahnen aus gelochter Folie kann der Lochdurchmesser variieren. Es ist aber auch denkbar, Folien zu verwenden, die durch eine Bedruckung die Lichtdurchlässigkeit verändern. Beispielsweise kann der Grundträger der Folien weitgehend glasklar sein, während eine Bedruckung auf der Folie die Lichtdurchlässigkeit allmählich reduziert. Zum Bedrucken kommt letztlich jedes beliebige Muster in Frage, vorzugsweise mit einer Feinheit, damit es aus einer gewissen Entfernung nicht mehr als aus einzelnen Linien bestehend erkennbar ist.

Die Veränderung der Lichtdurchlässigkeit kann kontinuierlich oder sprunghaft erfolgen. Für welche Variante sich der Fachmann entscheidet, hängt von den technischen Randbedingungen und davon ab, inwieweit sich die unterschiedlichen Arten in das Gesamtbild des Fahrzeugs integrieren.

Im Übrigen sind Weiterbildungen der Erfindung Gegenstand von Unteransprüchen.

Es sind eine Reihe von Abwandlungen der geoffenbarten Ausführungsbeispiele möglich, wie sich dies dem Fachmann ohne weiteres beim Studium der Figurenbeschreibung erschließt.

In der Zeichnung ist ein Ausführungsbeispiel des Gegenstandes der Erfindung dargestellt. Es zeigen:
- Fig. 1: den aufgebrochen veranschaulichten Heckbereich eines Kraftfahrzeugs mit Blick auf die Innenseite der hinteren rechten Seitentür,
- Fig. 2: das Antriebsprinzip für ein Fensterrollo, nebst Ausführungsformen von Trägern für Rollobahnen, jeweils im Ausschnitt, und
- Fig. 3: das Dach eines Kraftfahrzeuges in einer Draufsicht und im Ausschnitt, in Verbindung mit einem erfindungsgemäßen Rollo.

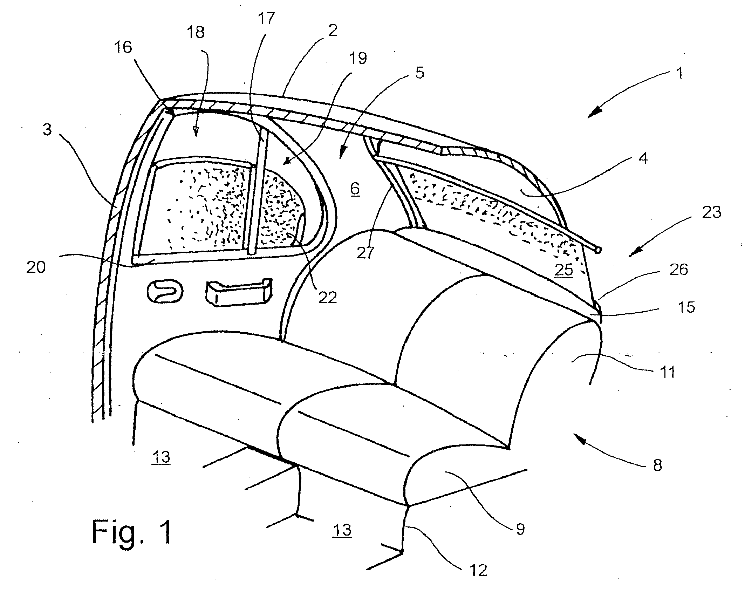

Fig. 1 stellt den aufgebrochenen, abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6 ist an der B-Säule 3 eine hintere, rechte Seitentür 7 in bekannter Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere, rechte Seitentür ist in der für Limousinen üblichen Weise mit einem Seitenfenster 16 versehen. Das Seitenfenster 16 wird durch eine etwa vertikal verlaufende Strebe 17 in ein im wesentlichen viereckiges Fensterfeld 18 sowie ein etwa dreieckiges Fensterfeld 19 aufgeteilt. Am unteren Ende werden die beiden Felder 18 und 19 von einer durchlaufenden Fensterbrüstung 20 begrenzt.

Die in dem Fensterfeld 18 vorhandene Scheibe ist in der bekannten Weise auf und ab zu bewegen, wozu sie unter anderem in der vertikalen Strebe 17 in bekannter Weise geführt ist. Die in dem dreieckigen Fensterfeld 19vorhandene Scheibe ist starr angeordnet.

Beide Fensterfelder 18 und 19 sind durch jeweils zugeordnete Rollobahnen 21 und 22 abzuschatten. Der Antriebsmechanismus für die beiden Rollobahnen 19 und 21 befindet sich in dem Innenraum der Tür 7 unterhalb der Fensterbrüstung 20.

Auf der Innenseite vor dem Heckfenster 4 befindet sich ein Heckscheibenrollo 23. Von dem Heckscheibenrollo 23 ist dessen teilweise ausgezogene Rollobahn 25, die durch einen Schlitz 26 in der Hutablage 15 ausgezogen wird, sowie eine der seitlichen Führungsschienen 27 zu erkennen. Die Führungsschiene 27 beginnt an der hinter der Rücksitzlehne 11 vorhandenen Hutablage 15 und verläuft neben der seitlichen Fensterkante. Ein weitere Führungsschiene ist spiegelbildlich angeordnet.

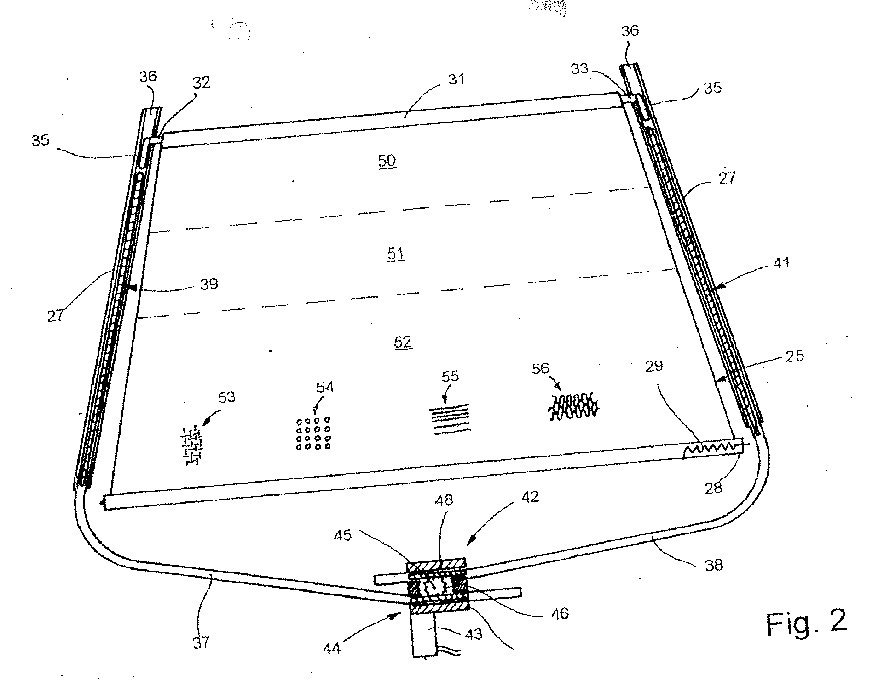

Der prinzipelle Aufbau des Heckscheibenrollos 14 ergibt sich aus Fig. 2.

Unterhalb der Hutablage 15 ist, wie sich aus Fig. 2 ergibt, eine Wickelwelle 28 drehbar gelagert, an der mit einer Kante die Rollobahn 25 befestigt ist. Die Wickelwelle 28 ist mit Hilfe eines schematisch angedeuteten Federmotors 29 im Sinne des Aufwickelns der Rollobahn 25 auf die Wickelwelle 28 vorgespannt. Hierzu ist eine Schraubenfeder vorgesehen, die einends karosseriefest verankert und andernends in der Wickelwelle 28 festgelegt ist.

Die Rollobahn 25 weist einen etwa trapezförmigen Zuschnitt auf und ist an ihrer von der Wickelwelle 19 abliegenden Kante mit einer schlauchförmigen Schlaufe 31 versehen. Durch die schlauchförmige Schlaufe 31 führt ein Auszugsprofil oder Spriegel, in dem Endstücke 32 und 33 teleskopartig gelagert sind. Die Endstücke 32 und 33 weisen einen Halsteil 34 auf, der einen kleineren Durchmesser aufweist als ein sich daran anschließendes Führungsglied 35, das die Gestalt eines kurzen zylinderförmigen Abschnitts aufweist. Die Führungsglieder 35 laufen in den Führungsschienen 27, die neben den beiden Seitenkanten des Heckfensters 4 angeordnet sind.

Jede der Führungsschienen 16 enthält eine hinterschnittene Führungsnut 36, die sich in Richtung auf die Rollobahn 15 in einem Führungsschlitz öffnet.

Das untere Ende jeder Führungsschiene 27 ist mit einem Führungsrohr 37, 38 verbunden, in denen ausknicksicher zwei biegsame Schubglieder 39 und 41 geführt sind. Die biegsamen Schubglieder 39 und 41 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 37 und 38 verbinden die Führungsschienen 27 mit einem Getriebemotor 42. Der Getriebemotor 42 setzt sich aus einem permanent erregten Gleichstrommotor 43 und einem Getriebe 44 zusammen auf dessen Ausgangswelle 45 ein Stirnzahnrad 46 drehfest sitzt. Das Zahnrad 46 kämmt mit den beiden Schubgliedern 39, 41 formschlüssig. Die Schubglieder 39, 41 laufen tangential an die an diametral gegenüberliegenden Seiten an dem Stirnzahnrad 46 vorbei und sind hierzu in entsprechenden Bohrungen 47, 48 geführt.

Durch Ingangsetzen des Getriebemotors 42 werden die Schubglieder 39, 41 wahlweise vorgeschoben oder zurückgezogen. Der Bewegung der Schubglieder 39, 41 folgen die Führungsstücke 32, 33. Diese werden mit Hilfe des Federmotors 29 gegen die freien Enden der Schubglieder 39, 41 anliegend gehalten, die sich in den Führungsnuten 36 befinden.

Wie Fig. 2 weiter erkennen lässt, ist die Fläche der Rollobahn 25 in insgesamt 3 Zonen 50, 51 und 52 aufgeteilt. Die Unterteilung der Zonen soll durch die gestrichelten Linien angedeutet sein. Die Zonen 50, 51 und 52 erstrecken sich vom linken bis zum rechten Rand der Rollobahn 25. Sie sind in Längsrichtung der Rollobahn 25, d.h. in Richtung parallel zur Bewegungsrichtung der Rollobahn 25 übereinander angeordnet.

Wie aus Fig. 1 zu erkennen ist, soll dabei die Lichtdurchlässigkeit in der Zone 50 am kleinsten sein; in Fig. 1 ist der Bereich der stärksten Lichtabschwächung, also die Zone 50, durch die Punktierung angedeutet. In der Zone 51 ist die Lichtdurchlässigkeit etwas stärker, während in der Zone 52 die Lichtdurchlässigkeit praktisch überhaupt nicht oder nur sehr geringfügig beeinträchtigt sein soll.

Im Einsatz bedeutet dies, bei steilstehender Sonne und ausgefahrener Rollobahn 25 wird unmittelbar neben der Oberkante des Heckfensters 4 eine sehr starke Abminderung des Lichteinfalls erreicht. Im Anschluss daran ist die Abminderung etwas schwächer, während im untersten Bereich unmittelbar angrenzend an die Hutablage 15 keine nennenswerte Lichtabschwächung erzielt wird.

Durch diese Aufteilung in unterschiedliche Zonen wird erreicht, dass der für die Sicht nach hinten am wenigsten bedeutsame Teil sehr stark abgedunkelt ist, um hier möglichst wenig Sonnenlicht einfallen zu lassen. Im Bereich der Zone 51, der zum Teil noch für die Sicht nach hinten von Bedeutung ist, stellt die Lichtdurchlässigkeit einen Kompromiss zwischen Abschattungswirkung und brauchbarer Sicht nach hinten dar. Die unmittelbar oberhalb der Hutablage 15 befindlichen Zone 52, die für die Sicht nach hinten am wichtigsten ist, ist praktisch unvermindert durchsichtig. Die Sonnenstrahlung, die hier noch einfallen kann, trägt nur in geringem Maße zur Erwärmung bei, und insbesondere wird der Komfort, der im Fond sitzenden Passagiere durch die Sonne nicht mehr beeinträchtigt, obwohl die Sonne durch die Zone 52 praktisch unvermindert eintreten kann.

Je nachdem aus welchem Material die Rollobahn 25 besteht, sind unterschiedliche Maßnahmen denkbar, um die gewünschte unterschiedliche Lichtdurchlässigkeit zu bekommen. Beispielsweise ist bei 53 schematisch ein Gewebe angedeutet. Dieses Gewebe kann hinsichtlich der Lichtdurchlässigkeit verändert werden, indem beispielsweise die Fadendichte in der Zone 50 größer ist als in der Zone 51 und in der Zone 51 wiederum dichter als in der Zone 52.

Eine andere Möglichkeit die unterschiedliche Lichtdurchlässigkeit bei einem Gewebe zu erzielen, besteht darin, beispielsweise in der Zone 50 Kettfäden zu verwenden, die nahezu schwarz eingefärbt sind, während die Kettfäden in der Zone 51 lediglich grau eingefärbt sind und in der Zone 52 keinerlei Einfärbung aufweisen. Hierdurch wird die Lichtdurchdringung im Bereich der Fäden verändert, während die "Maschenweite" im Gewebe unverändert bleibt.

Es sind auch beide Kombinationen denkbar.

Schließlich ist es möglich, das Gewebe zu bedrucken, um die unterschiedliche Lichtdurchlässigkeit zu bekommen.

Bei 54 ist ein Ausschnitt aus einer Rollobahn 25 angedeutet, die durch Lochen einer ansonsten undurchsichtigen Folie durchsichtig gemacht wird. In diesem Falle kann die Folie im Bereich der Zone 50 beispielsweise ungelocht sein und somit vollständig lichtundurchlässig, im Bereich der Zone 51 mit verhältnismäßig kleinen Löchern, während im Bereich der Zone 52 große Löcher mit einem geringen Lochabstand verwendet wird.

Wenn eine vollständige Abdunklung im Bereich der Zone 50 unerwünscht ist, kann auch hier eine Lochung vorgesehen sein.

Bei 55 ist ein Ausschnitt aus einer Rollobahn 25 dargestellt, die aus einer ungelochten aber durchsichtigen Folie besteht. Die unterschiedliche Lichtdurchlässigkeit der Folie kann erreicht werden, indem die Folie mit einem Muster aus schwarzen Linien bedruckt wird. Das Linienmuster ist so gewählt, dass im Bereich der Zone 50 mit der geringsten Lichtdurchlässigkeit die Linien sehr dicht beieinander liegen, während die Lichtdurchlässigkeit im Bereich der Zone 52 maximal ist, indem dort überhaupt keine Bedruckung vorhanden ist. Jedes andere geeignete Muster ist ebenfalls möglich.

Insbesondere bei der Verwendung einer Bedruckung, können die Zonen 50 bis 52 gleitend ineinander übergehen, in der Weise, dass sich ein "Graukeil" ergibt. Hierunter versteht man im Bereich der Fotografie den Übergang der Lichtdurchlässigkeit oder des Schwärzungsgrades von vollständigem schwarz zu weiß.

Bei 56 ist schließlich schematisch ein Ausschnitt aus einer Rollobahn 25 gezeigt, die aus einer Maschenware, beispielsweise einem Gewirke, hergestellt ist. Hier kann die unterschiedliche Lichtdurchlässigkeit durch die Wahl der Maschenweite in Kombination mit der Fadendicke eingestellt werden.

Zur Veränderung der Lichtdurchlässigkeit ist hier zusätzlich auch eine Einfärbung oder Bedruckung möglich.

Bei dem Ausführungsbeispiel gemäß Fig. 2 liegen die einzelnen Zonen der unterschiedlichen Lichtdurchlässigkeit parallel zu der Achse der Wickelwelle 28, d. h., die Zonen zeigen eine Lichtdurchlässigkeit, die bei ausgefahrenem Rollo mit zunehmender Höhe über dem Boden, auf dem das Fahrzeug steht, abnimmt. Eine solche unterschiedliche Lichtdurchlässigkeit, bezogen auf die vertikale Richtung, ist selbstverständlich auch bei dem gezeigten Seitenfensterrollo mit den Rollobahnen 21 und 22 möglich. Für den Fachmann ist dies ohne weiteres verständlich, ohne dass es einer weiteren zeichnerischen Darstellung bedarf, da letztendlich die im Westenlichen viereckige Rollobahn 21 in derselben Weise bewegbar ist, wie die Rollobahn 25 des Heckscheibenrollos 23.

Fig. 1 zeigt darüber hinaus eine weitere Variante, die Lichtdurchlässigkeit zu verändern. So ist die Lichtdurchlässigkeit im Bereich der Rollobahn 22, die in horizontaler Richtung sich bewegt, am kleinsten. Dieselbe Lichtdurchlässigkeit wird bei der Rollobahn 21 in der Nähe der Führungsschiene 17 erreicht. Hingegen ist die Lichtdurchlässigkeit der Rollobahn 21 in der Nähe der B-Säule 3 am besten, d.h. hier tritt praktisch keine Lichtabschwächung ein.

Bei dieser Ausführungsform ändert sich die Lichtdurchlässigkeit in Richtung parallel zur Längsachse des Fahrzeugs, während in vertikaler Richtung die Lichtdurchlässigkeit isotrop ist.

Die unterschiedliche Lichtdurchlässigkeit der Rollobahnen 21 und 22 ist in Fig. 1 durch eine unterschiedliche Dichte von Punkten angedeutet.

Diese Art der unterschiedlichen Lichtdurchlässigkeit ermöglicht es einer im Fond sitzenden Person einen guten Ausblick nach schräg vorne zu haben, während sie von der Seite her von außen nicht zu beobachten ist, weil das Rollo einen Einblick unmittelbar von der Seite her verhindert.

Der Antrieb für die Rollobahn 22 ist ausführlich in der DE 103 54 233.7 A1 beschrieben, auf die hier ausdrücklich Bezug genommen ist.

Wie sich aus der Zusammenschau mit der DE 103 54 233.78 A1 zeigt, liegt hier die Wickelwelle der Rollobahn 21 parallel zu der Fensterbrüstung 20. Das bedeutet, dass die Rollobahn einen Gradienten der Lichtdurchlässigkeit aufweist, der parallel zur Wickelwelle ausgerichtet ist. Das bedeutet, die Lichtdurchlässigkeit ist neben einer der Längskanten der Rollobahn 22 größer, als neben der anderen Längskante, also der Unterkante.

Schließlich ist zu beachten, dass die Erfindung in Verbindung mit einem elektrisch betätigten Fensterrollo erläutert ist. Es besteht jedoch keine Notwendigkeit, die Erfindung nur auf solche Antriebe zu beschränken. Vielmehr sind auch handbetätigte Rollos mit unterschiedlicher Durchlässigkeit zu versehen, die sich in Richtung parallel oder quer zur Wickelrichtung ändert. Für ein solches Rollo bedarf es beispielsweise nicht der beiden Führungsschienen 27. Statt dessen ist das Auszugsprofil der Schlaufe 31 mit wenigstens einem Haken und/oder einem Handgriff versehen, um das Auszugsprofil auszuziehen und an geeigneter Stelle neben der betreffenden Fensterkante einzuhängen.

Solche Lösungen sind dem Fachmann bekannt und brauchen deswegen hier im Einzelnen nicht erläutert zu werden, da sie nicht Gegenstand der Erfindung sind.

Anstelle eines Antriebs der beweglichen Kante der jeweiligen Rollobahn ist es auch denkbar, den Elektromotor mit der Wickelwelle zu kuppeln und die Feder 29, die als Federmotor dient, als Zugfeder einzusetzen, die das Auszugsprofil bzw. die Führungsstücke beispielsweise über Seile in Richtung von der Wickelwelle 28 weg zieht.

Die Erfindung ist vorstehend im Wesentlichen mit den Seitenfenstern sowie dem Heckfenster erläutert. Sie ist jedoch nicht auf diesen Anwendungsbereich beschränkt. Unter Fenstern im Kraftfahrzeug kann im Allgemeinen auch ein Glasdach oder Glasschiebedach verstanden werden, wie es bei 60 in dem Dach 2 veranschaulicht ist.

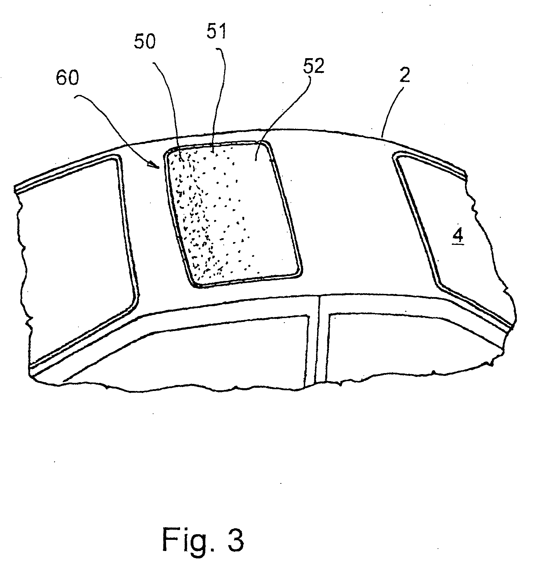

Unterhalb des Glasdachs 60 kann in bekannter Weise eine Rollobahn ausgezogen werden, um den Lichteintritt der durch das Glasdach 60 zu modulieren. Auch hier kann wiederum eine unterschiedliche Lichtdurchlässigkeit in der Rollobahn vorgesehen sein. Wie die in Fig. 3 ausgefahrene Rollobahn erkennen lässt, liegen die bereits beschriebenen Bereiche 50, 51 und 52 der Rollobahn mit unterschiedlicher Lichtdurchlässigkeit in Fahrtrichtung hintereinander. Die geringste Lichtdurchlässigkeit wird an der Vorderkante erreicht, während die größte Lichtdurchlässigkeit im Bereich der Hinterkante des Glasdachs 60 vorgesehen ist. Dadurch ist es möglich, im hinteren Bereich des Fahrzeugs viel Licht zu bekommen, während der Fahrer selbst von oben her gegen unmittelbare Sonnenseinstrahlung geschützt ist.

Bei einem Fensterrollo für Kraftfahrzeuge ist die Lichtdurchlässigkeit der Rollobahn, über die Fläche gesehen, anisotrop. Entsprechend der jeweils gewünschten und erforderlichen Durchlässigkeit ändert sich die Lichtdurchlässigkeit von der Fensteroberkante zur Fensterunterkante in dem Sinne, dass im Bereich der Fensterunterkante eine bessere Lichtdurchlässigkeit vorhanden ist. Bei einer anderen Ausführungsform ändert sich die Lichtdurchlässigkeit von der Fensterhinterkante zur Fenstervorderkante. Die beste Durchsichtigkeit ist neben der Fenstervorderkante vorhanden.

## Patentansprüche

1. Fensterrollo (23) für Kraftfahrzeugfenster (4,16), die eine Oberkante und eine Unterkante aufweisen,
mit einer Wickelwelle (28), die drehbar gelagert ist,
mit einer Rollobahn (21,22,25), die mit einer Kante an der Wickelwelle (28) befestigt ist, wobei deren Lichtdurchlässigkeit über ihre Fläche unterschiedliche ist, derart, dass bei vor dem Kraftfahrzeugfenster (4,16) aufgespannter Rollobahn (21,22,25) die Lichtdurchlässigkeit in der Nachbarschaft der Oberkante geringer ist als in der Nachbarschaft der Unterkante des Fahrzeugfensters, und
mit einer Antriebseinrichtung (29) wenigstens für die Wickelwelle (28) um die Wickelwelle (28) im Sinne des Aufwickelns der Rollbahn (21,22,25) zu bewegen.

2. Fensterrollo (23) für Kraftfahrzeugfenster (4,16), die eine Vorderkante und eine in Richtung des Fahrzeughecks gelegenen Hinterkante aufweisen,
mit einer Wickelwelle (28), die drehbar gelagert ist,
mit einer Rollobahn (21,22,25), die mit einer Kante an der Wickelwelle (28) befestigt ist, wobei deren Lichtdurchlässigkeit über ihre Fläche unterschiedliche ist, derart, dass bei vor dem Kraftfahrzeugfenster (4,46) aufgespannter Rollobahn (21,22,25) die Lichtdurchlässigkeit in der Nachbarschaft der Hinterkante geringer ist als in der Nachbarschaft der Vorderkante des Fahrzeugfesnsters, und
mit einer Antriebseinrichtung (29) wenigstens für die Wickelwelle (28) um die Wickelwelle (28) im Sinne des Aufwickelns der Rollbahn (21,22,25) zu bewegen.

3. Fensterrollo (23) für Kraftfahrzeugfenster (4,16), die eine Vorderkante und eine in Richtung des Fahrzeughecks gelegenen Hinterkante aufweisen,
mit einer Wickelwelle (28), die drehbar gelagert ist,
mit einer Rollobahn (21,22,25), die mit einer Kante an der Wickelwelle (28) befestigt ist, wobei deren Lichtdurchlässigkeit über ihre Fläche unterschiedlich ist, derart, dass bei vor dem Kraftfahrzeugfenster (4,16) aufgespannter Rollobahn (21,22,25) die Lichtdurchlässigkeit in der Nachbarschaft der Vorderkante geringer ist als in der Nachbarschaft der Hinterkante des Fahrzeugfensters, und
mit einer Antriebseinrichtung (29) wenigstens für die Wickelwelle (28) um die Wickelwelle (28) im Sinne des Aufwickelns der Rollbahn (21,22,25) zu bewegen.

4. Fensterrollo nach einem der Ansprüche 1 bis 3, **dadurch gekennzeichnet, dass** die Wickelwelle (28) parallel zu der Oberkante des Kraftfahrzeugfensters (4,16) verläuft.

5. Fensterrollo nach einem der Ansprüche 1 bis 3, **dadurch gekennzeichnet, dass** die Wickelwelle (28) parallel zu der Unterkante des Kraftfahrzeugfensters (4,16) verläuft.

6. Fensterrollo nach einem der Ansprüche 1 bis 3, **dadurch gekennzeichnet, dass** die Wickelwelle (28) parallel zu der Hinterkante verläuft.

7. Fensterrollo nach einem der Ansprüche 1 bis 3, **dadurch gekennzeichnet, dass** die Wickelwelle (28) parallel zur Vorderkante verläuft.

8. Fensterrollo nach einem der Ansprüche 1 bis 3, **dadurch gekennzeichnet, dass** sich die Lichtdurchlässigkeit von einem Rand der Rollobahn (21,22,25) zu dem anderen sprunghaft verändert.

9. Fensterrollo nach einem der Ansprüche 1 bis 3, **dadurch gekennzeichnet, dass** sich die Lichtdurchlässigkeit von der einen Kante zu der anderen Kante quasi kontinuierlich verändert.

10. Fensterrollo nach einem der Ansprüche 1 bis 3, **dadurch gekennzeichnet, dass** zur Anderung der Lichtdurchlässigkeit der Rollobahn (21,22,25), die aus einer Maschenware, vorzugsweise einem Kettengewirke besteht, die Maschenweiten entsprechend verändert ist.

11. Fensterrollo nach einem der Ansprüche 1 bis 3, **dadurch gekennzeichnet, dass** die Rollobahn (21,22,25) im Sinne einer Veränderung der Lichtdurchlässigkeit unterschiedlich eingefärbt ist.

12. Fensterrollo nach einem der Ansprüche 1 bis 3, **dadurch gekennzeichnet, dass** die Rollobahn (21,22,25), entsprechend der Lichtdurchlässigkeit, unterschiedlich dicht gewebt ist.

13. Fensterrollo nach einem der Ansprüche 1 bis 3, **dadurch gekennzeichnet, dass** die Rollobahn (21,22,25) entsprechend der Lichtdurchlässigkeit eine unterschiedliche Fadendichte aufweist.

14. Fensterrollo nach einem der Ansprüche 1 bis 3, **dadurch gekennzeichnet, dass** die aus einer gelochten Folie gebildete Rollobahn (21,22,25), entsprechend der Lichtdurchlässigkeit unterschiedliche Lochweiten aufweist.

15. Fensterrollo nach einem der Ansprüche 1 bis 3, **dadurch gekennzeichnet, dass** die aus einer gelochten Folie gebildete Rollobahn (21,22,25), entsprechend der Lichtdurchlässigkeit mit lichtundurchlässigen Mustern bedruckt ist.

16. Fensterrollo nach einem der Ansprüche 1 bis 3, **dadurch gekennzeichnet, dass** das Fensterrollo (21,22,25) ein handbetriebenes Fensterrollo ist, wobei an der freien von der Wickelwelle (28) abliegenden Kante der Rollobahn (21,22,25) Einhängemittel vorgesehen sind, um die Rollobahn (21,22,25) im ausgefahrenen Zustand zu fixieren.

17. Fensterrollo nach einem der Ansprüche 1 bis 3, **dadurch gekennzeichnet, dass** es sich um ein elektrisch betätigtes Rollo (23) handelt, bei dem die von der Wickelwelle (28) abliegende Kante der Rollobahn (21,22,25) mit einem Auszugsprofil (32,33) verbunden ist, das über Schubglieder (39,41) oder Federn im Sinne eines Ausfahrens der Rollobahn (21,22,25) zu betätigen ist.

18. Fensterrollo nach Anspruch 17, **dadurch gekennzeichnet, dass** dem wenigstens einem Schubglied (39,41) ein Elektromotor (42) zugeordnet ist.

19. Fensterrollo nach einem der Ansprüche 1 bis 3, **dadurch gekennzeichnet, dass** der Wickelwelle (28) ein Elektromotor zugeordnet ist.

20. Fensterrollo nach einem der Ansprüche 1 bis 3,
**dadurch gekennzeichnet, dass** die Rollobahn (21,22,25) einen Zuschnitt aufweist, der der Fläche des abzuschattenden Fahrzeugfensters (4,16) entspricht.

21. Fensterrollo nach einem der Ansprüche 1 bis 3, **dadurch gekennzeichnet, dass** es sich bei dem Fahrzeugfenster um ein Seitenfenster, ein Heckfenster oder ein Glasdachfenster oder ein Glasdach handelt.
